# EUROPEAN PATENT SPECIFICATION

(11) **EP 4 307 540 B1**
(45) Date of publication and mention of the grant of the patent: **09.12.2026**
(21) Application number: 22185091.0
(22) Date of filing: 15.07.2022
(51) Int. Cl.: H02K 7/18, H02P 23/04

(54) **AIRGAP CONTROL IN AN ELECTRIC GENERATOR FOR A WIND TURBINE**
LUFTSPALTREGELUNG IN EINEM ELEKTRISCHEN GENERATOR FÜR EINE WINDTURBINE
CONTRÔLE DE L'ENTREFER DANS UN GÉNÉRATEUR ÉLECTRIQUE D'ÉOLIENNE

(43) Date of publication of application: 17.01.2024
(73) Proprietor: Siemens Gamesa Renewable Energy A/S, 7330 Brande (DK)
(72) Inventor: Azar, Ziad, Sheffield S10 4ED (GB); Duke, Alexander, Sheffield S10 5SN (GB)
(74) Representative: SGRE-Association

(56) References cited:
- EP-A1- 3 086 467
- US-A1- 2008 164 697
- US-A1- 2014 356 162

## Description

### Field of invention

The invention relates to a controller and a method for controlling the airgap between stator and rotor in an electric generator for a wind turbine. The invention particularly relates to large permanent magnet electric generators including a plurality of winding systems.

### Art Background

US 2014/0356162 A1 discloses a wind power turbine and wind power turbine control method, wherein a localized additional magnetic force is defined as a function of a quantity selected from a group including a distance between the rotor and the stator, the variation of a time in the distance and misalignment between the rotor and the stator. The method further comprises to regulate the selective quantity using the localized additional magnetic force defined.

US 2008/0164697 A1 discloses a method and apparatus for controlling rotary machines including the disclosure of clearance gap control system. The controller is coupled with the assembly and the converter and is configured to modulate a dimension of the gap by modulating the flux.

EP 3 086 467 A1 describes a method of controlling an electrical machine comprising a rotor and a stator separated by an airgap, which method comprises the steps of obtaining a measurement of airgap width during operation of the machine; determining a corrective value of negative Id current on the basis of the airgap width measurement; and injecting the negative Id current into windings of the electrical machine to correct the airgap width.

Electric generators for wind turbines, in particular direct drive generators of great dimensions, have airgap deformation due to magnetic pull, static and/or dynamic rotor eccentricity, manufacturing and assembly tolerances, unbalanced loads, nonuniform thermal deformation as well as tilt and yaw loads. Such airgap deformation is non-uniform when measured along a circumferential direction, i.e. a circular direction around the axis of rotation of the electric generator as well as along the axial length of the electric generator. To ensure that no collision occurs between stator and rotor, the airgap is designed to account for the changes and deformations occurring during operation, this leading to a larger designed airgap and thus lower torque. Collision between stator and rotor may also be avoided by implementing security systems which stops the electric generator if the airgap reaches a minimum threshold value, but this obviously is not desirable, as it determines a reduction of the energy production. The airgap has to be designed with account for all extreme conditions and tolerances, and not only for the desired performance of the electric generators.

It is therefore desirable to more effectively control the airgap in an electric generator for a wind turbine, to provide higher performances in an electric generator by reducing as much as possible the airgap between stator and rotor, at the same time preventing any collision between stator and rotor.

### Summary of the Invention

This objective may be solved by the electric generator and the method for operating an electric generator according to the independent claims. Advantageous embodiments of the present invention are described by the dependent claims.

According to a first aspect of the present invention a wind turbine is provided, an electric generator for a wind turbine according to claim 1 is provided.

The electric generator may be a permanent magnet electric generator. Particularly, the electric generator may be used in a wind turbine.

According to a second aspect of the present invention a method of operating an electric generator according to claim 10 is provided.

According to embodiments of the present invention, a plurality of sensors is positioned in a plurality of respective positions distributed about the axis of rotation for providing a plurality of respective thickness measurements of the airgap, the controller being connected to the plurality of sensors for receiving the plurality of measurements of the airgap.

According to other embodiments of the present invention, the controller is configured for determining the thickness of the airgap through an estimation procedure. For example, flux or voltage estimations may be used as inputs in the controller to estimate the thickness of the airgap.

With "winding system" it is meant a system of wound conductors within the generator covering one portion or a plurality of portions of the complete circumference of the generator about its rotational axis. In embodiments of the present invention, the electric generator may include n winding systems, n being an integer greater than one, each covering an angle of 360°/n degrees around a rotational axis of the electric generator. According to one embodiment, two winding systems may be present, each winding system covering an angle of 180 degrees. According to another embodiment, four winding systems may be present, each winding system covering an angle of 90 degrees. In embodiments of the present invention, the electric generator may include n winding systems, n being an integer greater than one, each covering a plurality of angular portions around a rotational axis of the electric generator. The angular portions of one winding systems may be alternated between the angular portions of the other winding system(s). For example, according to one embodiment, two winding systems may be present, each winding system covering two angular portions of 90 degrees each, angularly alternated between two 90-degrees angular portions of the other winding system. The winding system may be a concentrated or distributed winding system.

In large systems where a plurality of winding systems is present, the current in each of the winding systems may be controlled for locally causing deformation of the airgap in order to compensate defects, like static and/or dynamic rotor eccentricity, manufacturing and assembly tolerances, unbalanced loads, nonuniform thermal deformation as well as tilt and yaw loads. The system prevents the airgap to reach an undesired minimum threshold airgap value. This may prevent the intervention of a security system for preventing collision between the stator and rotor by stopping the electric generator, therefore preventing the corresponding loss of torque production. This will enable to design a smaller airgap and thus produce a higher torque density and more AEP (Annual Energy Production). The minimum threshold airgap value may be determined by the controller, based on operating conditions.

According to embodiments of the present invention, the controller is configured for controlling the current flowing in each of the winding systems so that a plurality of magnetic radial forces respectively acting on the winding systems are generated, each magnetic radial force acting on the stator and/or rotor for reducing the airgap where the airgap is above the threshold airgap value and increasing the airgap where the airgap is below the threshold airgap value. This may provide a more uniform airgap along the circumferential direction.

According to embodiments of the present invention, the plurality of winding systems is provided in the stator or rotor, the rotor comprising a plurality of permanent magnets, a magnet pull being active between the stator and rotor as a result of the magnetic interaction between the winding systems and the permanent magnets. The controller is configured for controlling the current flowing in at least one of the winding systems so that the magnetic radial force decreases the magnet pull where the airgap is below the threshold airgap value. According to other embodiments of the present invention, the controller may be configured for controlling the current flowing in the winding systems so that a plurality of magnetic radial forces respectively acting on the winding systems are generated, each magnetic radial force acting on the stator and/or rotor decreasing the magnet pull where the airgap is below the threshold airgap value and increasing the magnet pull where the airgap is above the threshold airgap value. The resultant of the magnetic pull and magnetic radial force permits to control locally the thickness of the airgap, i.e. the local distance between stator and rotor.

According to embodiments of the present invention, the current in each winding system may be differently controlled in amplitude and/or phase, with respect to the other winding system(s). This enhances the balance of airgap, so minimising the parasitic effects, noise and vibration, as well as component lifetime.

### Brief Description of the Drawings

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.
Figure 1 shows a schematic section of a wind turbine including an electric generator according to the present invention.
Figure 2 shows a schematic section, orthogonal the axis of rotation, of an electric generator according to a first embodiment of the present invention.
Figure 3 shows a schematic section, orthogonal the axis of rotation, of an electric generator according to a second embodiment of the present invention.
Figure 4 shows a magnified view of the detail IV of Fig. 2.
Figure 5 shows a magnified view of the detail V of Fig. 2.

### Detailed Description

The illustrations in the drawings are schematically. It is noted that in different figures, similar or identical elements are provided with the same reference signs.

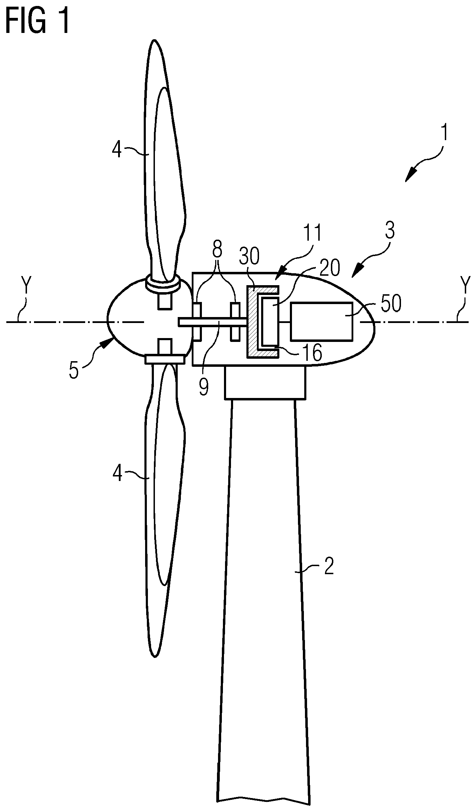

**Figure 1** shows a wind turbine 1 according to the invention. The wind turbine 1 comprises a tower 2, which is mounted on a non-depicted foundation. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y. The blades 4 extend radially with respect to the rotational axis Y.

The wind turbine 1 comprises an electric generator 11 having a controller 50. The wind rotor 5 is rotationally coupled with the electric generator 11 by means of a rotatable shaft. According to other possible embodiments of the present invention, the wind rotor 5 is rotationally coupled directly with the electric generator 11 (direct-drive generator configuration).

The electric generator 11 includes a stator 20 and a rotor 30. The rotor 30 is radially external to the stator 20 and is rotatable with respect to the stator 30 about the rotational axis Y. According to other embodiments of the present invention (not shown) the rotor is radially internal to the stator 11. According to other embodiments of the present invention (not shown) the rotor is axially stacked next to the stator 11 as would be the case in axial flux machines. According to other possible embodiments of the present invention (not represented in the attached figures), the present invention can be applied to an electric generator, which is not comprised in a wind turbine. According to embodiments of the present invention, the electric generator 11 is a permanent magnet electric generator 11, where a plurality of winding systems 41, 42, 43, 44 are provided in the stator 20, the rotor 30 comprising a plurality of permanent magnets 70, as further specified in the following. An airgap 10 is provided between the stator 30 and the stator 20 for allowing the necessary clearance which permits the rotation of the rotor 30 about the stator 20 without colliding therewith. The thickness of the airgap along a circumferential coordinate parallel to the direction of rotation of the rotor 30 is not constant, due to magnetic pull between the stator 20 and the permanent magnets 70, static and/or dynamic rotor eccentricity, manufacturing and assembly tolerances, unbalanced loads, nonuniform thermal deformation as well as wind turbine tilt and yaw loads.

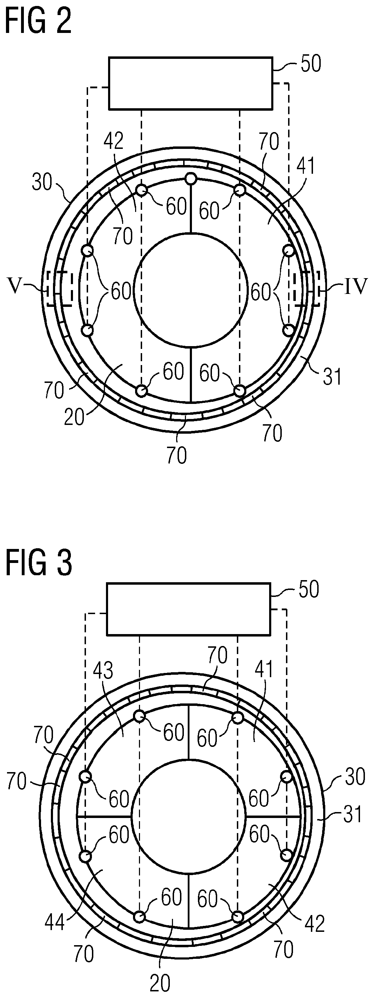

**Figures 2****,** **4** and **5** illustrate schematically a first embodiment of the electric generator 11. The stator 20 comprises a cylindrical stator body 21 having a plurality of radially protruding teeth interposed between a plurality of slots, so that each slot circumferentially extends between two adjacent teeth (teeth and slots are conventional and not shown in the schematic representation if figure 2). The slots accommodate two winding systems 41, 42, each winding system 41, 42 covering an angle of 180 degrees about the rotational axis Y. Each winding system may be powered independently from the other winding system. The rotor 30 includes a cylindrical hollow rotor body 31 on which the plurality of permanent magnets 70 are fixed. The magnets radially protrude towards the stator 20, the airgap 10 being radially interposed between the stator 20 and the permanent magnets 70. According to embodiments of the present invention, the stator 20 comprises a plurality of sensors 60 positioned in a plurality of respective positions distributed about the axis of rotation Y for providing a plurality of respective measurements of the airgap 10. According to other embodiments of the invention, the plurality of sensors 60 are provided on the rotor 30. According to other embodiments of the invention, the plurality of sensors 60 are provided on the stator 20 and rotor 30. According to other embodiments of the invention, the sensors are not present, and the airgap 10 is estimated by the controller 50 using estimation procedures. Flux or voltage estimations may be used as inputs in the controller 50 to estimate the thickness of the airgap 10. The electric generator 11 further includes a controller 50 connected to the plurality of sensors 60 for receiving the plurality of measurements of the airgap 10. The controller 50 controls the current flowing in the winding systems 41, 42 the controller 50. The current flowing in each winding systems 41, 42 generate a respective magnetic radial force, which is used in operation for controlling the thickness of the airgap 10. The magnetic radial force generated in each winding systems 41, 42 is used to contrast the effects of the magnetic pull between the stator 20 and the permanent magnets 70, static and/or dynamic rotor eccentricity, manufacturing and assembly tolerances, unbalanced loads, nonuniform thermal deformation as well as wind turbine tilt and yaw loads. The controller 50 is configured for controlling the current flowing in at least one of the winding systems 41, 42 so the magnetic radial force acts on the stator 20 and/or rotor 30 for increasing the airgap 10 where the airgap is below a threshold airgap value, thus avoiding collision between stator 20 and rotor 30. The magnetic radial force may provide such effect by deforming the stator body 21 and/or the winding systems 41, 42, and/or the rotor body. The controller 50 may be further configured for controlling the current flowing in at least one of the winding systems 41, 42 so the magnetic radial force acts on the stator 20 and/or rotor 30 for decreasing the airgap 10 where the airgap is above a threshold airgap value. Increasing the airgap 10 where the airgap is below a threshold airgap value and at the same time decreasing the airgap 10 where the airgap is above a threshold airgap value may have the effect of making the airgap as uniform in thickness as possible along the circumferential direction.

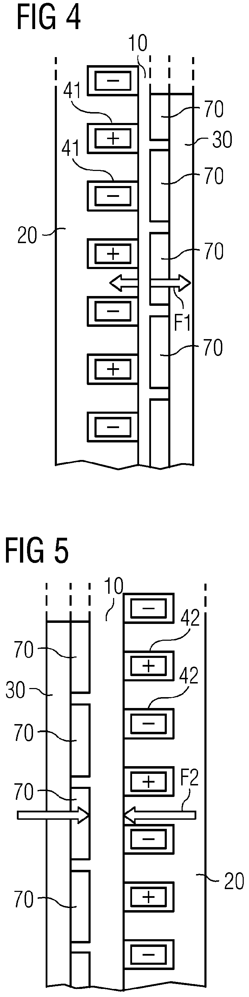

Fig. 2 schematically shows an operative condition, where the thickness of the airgap 10 is variable along a circumferential direction. A minimum of the thickness of the airgap 10 is reached at the right side of the airgap 10 of fig. 2 (detail IV, magnified in fig. 4), at the first winding system 41. A minimum of the thickness of the airgap 10 is reached at the right side of the airgap 10 of fig. 2 (detail V, magnified in fig. 5), at the second winding system 42. With reference to fig. 4, if the airgap 10 is below a threshold airgap value, the controller 50 controls the current flowing in the first winding systems 41, so that a respective first magnetic radial force F1 is generated. The first magnetic radial force F1 acts on the stator 20 and/or rotor 30 for increasing the airgap 10. The first magnetic radial force F1 decreases the magnet pull between stator 20 and rotor 30 where the airgap 10 is below the threshold airgap value. With reference to fig. 5, if the airgap 10 is above a threshold airgap value, the controller 50 controls the current flowing in the second winding systems 42, so that a respective second magnetic radial force F2 is generated.

The second magnetic radial force F2 acts on the stator 20 and/or rotor 30 for decreasing the airgap 10. The second magnetic radial force F2 increases the magnet pull between the stator 20 and rotor 30 where the airgap 10 is above the threshold airgap value. The controller 50 is configured for controlling the current flowing in the winding systems 41, 42 by controlling the amplitude and/or phase angle of the current. In an example outside of the invention, the reference threshold airgap value may be predefined, i.e. previously determined and saved in a memory associated with the controller. According to the invention, the threshold airgap value is determined by the controller 50 based on operating conditions. In an example outside of the invention, the threshold airgap value is determined by the controller 50 based on the plurality of measurements provided by the plurality of sensors 60, for example, the threshold airgap value is calculated by the controller 50 as mean value of the plurality of measurements provided by the plurality of sensors 60. According to the invention, the threshold airgap value is calculated by the controller 50 by means of an estimation method, involving flux or voltage estimations.

**Figure 3** illustrates schematically a second embodiment of the electric generator 11. In the second embodiment, the electric generator 11 differentiates itself form the one in the first embodiment for comprising four winding systems 41, 42, 43, 44. According to other embodiments of the invention, the electric generator 11 comprises n winding systems, where n is an integer greater than one, each covering an angle of 360°/n degrees around a rotational axis of the electric generator 11. In such embodiment, the controller 50 is configured to operate the n winding systems in a similar way as that described with reference to the first embodiment of figure 2.

## Claims

1. An electric generator (11) for a wind turbine (1) comprising a stator (20) or rotor (30), the stator (20) or rotor (30) having plurality of winding systems (41, 42, 43, 44), each winding system (41, 42, 43, 44) covering a respective angular portion of the stator (20) or rotor (30) about an axis of rotation (Y) of the electric generator (11), and a controller (50) for controlling the current flowing in the winding systems (41, 42, 43, 44), wherein the controller (50) is configured for receiving or determining a thickness of an airgap (10) between the stator (20) and the rotor (30) and controlling the current flowing in at least one of the winding systems (41, 42, 43, 44) so that a respective magnetic radial force is generated, the magnetic radial force acting on the stator (20) and/or rotor (30) for increasing the airgap
**characterized in that**
the current is controlled for increasing the airgap (10) where the airgap (10) is below a threshold airgap value,
wherein the threshold airgap value is determined by the controller (50) based on operating conditions,
wherein the threshold airgap value is calculated by the controller (50) by means of an estimation method, involving flux or voltage estimations.

2. The electric generator (11) according to claim 1,
wherein a plurality of sensors (60) is positioned in a plurality of respective positions distributed about the axis of rotation (Y) for providing a plurality of respective thickness measurements of the airgap (10) between the stator (20) and the rotor (30), the controller (50) being connected to the plurality of sensors (60) for receiving the plurality of measurements of the airgap (10).

3. The electric generator (11) according to claim 1,
wherein the controller (50) is configured for determining the thickness of the airgap (10) through an estimation procedure.

4. The electric generator (11) according to any of the previous claims, wherein the controller (50) is configured for controlling the current flowing in each of the winding systems (41, 42, 43, 44) so that a plurality of magnetic radial forces respectively acting on the winding systems (41, 42, 43, 44) are generated, each magnetic radial force acting on the stator (20) and/or rotor (30) for reducing the airgap (10) where the airgap (10) is above the threshold airgap value and increasing the airgap where the airgap is below the threshold airgap value.

5. The electric generator (11) according to any of the previous claims 1 to 3, wherein the plurality of winding systems (41, 42, 43, 44) are provided in the stator (20), the rotor (30) comprising a plurality of permanent magnets (70), a magnet pull being active between the stator (20) and rotor (30) as a result of the magnetic interaction between the winding systems (41, 42, 43, 44) and the permanent magnets (70), the controller (50) being configured for controlling the current flowing in at least one of the winding systems (41, 42, 43, 44) so that the magnetic radial force decreases the magnet pull where the airgap (10) is below the threshold airgap value.

6. The electric generator (11) according to claim 5,
wherein the controller (50) is configured for controlling the current flowing in the winding systems (41, 42, 43, 44) so that a plurality of magnetic radial forces respectively acting on the winding systems (41, 42, 43, 44) are generated, each magnetic radial force acting on the stator (20) and/or rotor (30) decreasing the magnet pull where the airgap (10) is below the threshold airgap value and increasing the magnet pull where the airgap (10) is above the threshold airgap value.

7. The electric generator (11) according to any of the previous claims, wherein the electric generator (11) comprises n winding systems (41, 42, 43, 44), n being an integer greater than one, each covering an angle of 360°/n degrees around a rotational axis of the electric generator (11).

8. The electric generator (11) according to any of the previous claims wherein the controller (50) is configured for controlling the current flowing in at least one of the winding systems (41, 42, 43, 44) by controlling the amplitude and/or phase angle of the current.

9. A wind turbine (1) including an electric generator (11) according to any of the previous claims.

10. A method for operating an electric generator (11) for a wind turbine (1) comprising a stator (20) or rotor (30) having a plurality of winding systems (41, 42, 43, 44), each winding system (41, 42, 43, 44) covering a respective angular portion of the stator or rotor about an axis of rotation (Y) of the electric generator (11), the method including the steps of:
measuring or estimating a thickness of an airgap (10) between the stator (20) and the rotor (30), controlling the current flowing in the winding systems (41, 42, 43, 44), controlling, by a controller, the current flowing in at least one of the winding systems (41, 42, 43, 44) so that a respective magnetic radial force is generated, the magnetic radial force acting on the stator (20) and/or rotor (30) for increasing the airgap (10)
**characterized in that**
the current is controlled for increasing the airgap (10) where the airgap is below a threshold airgap value,
**wherein the** threshold airgap value is determined by the controller (50) based on operating conditions,
wherein the threshold airgap value is calculated by the controller (50) by means of an estimation method, involving flux or voltage estimations.

11. The method according to claim 10, wherein the step of controlling includes controlling the current flowing in each of the winding systems (41, 42, 43, 44) so that a plurality of magnetic radial forces respectively acting on the winding systems (41, 42, 43, 44) are generated, each magnetic radial force acting on the stator (20) and/or rotor (30) for reducing the airgap (10) where the airgap (10) is above the threshold airgap value and increasing the airgap where the airgap is below the threshold airgap value.

## Patentansprüche

1. Elektrischer Generator (11) für eine Windturbine (1), umfassend einen Stator (20) oder einen Rotor (30), wobei der Stator (20) oder der Rotor (30) eine Vielzahl von Wicklungssystemen (41, 42, 43, 44), wobei jedes Wicklungssystem (41, 42, 43, 44) einen jeweiligen Winkelabschnitt des Stators (20) oder des Rotors (30) um eine Drehachse (Y) des elektrischen Generators (11) abdeckt, und eine Steuerung (50) zum Steuern des Stroms, der in den Wicklungssystemen (41, 42, 43, 44) fließt, aufweist, wobei die Steuerung (50) zum Empfangen oder Bestimmen einer Dicke eines Luftspalts (10) zwischen dem Stator (20) und dem Rotor (30) und zum Steuern des Stroms, der in mindestens einem der Wicklungssysteme (41, 42, 43, 44) fließt, konfiguriert ist, sodass eine jeweilige magnetische Radialkraft erzeugt wird, wobei die magnetische Radialkraft zum Vergrößern des Luftspalts auf den Stator (20) und/oder den Rotor (30) einwirkt,
**dadurch gekennzeichnet, dass**
der Strom zum Vergrößern des Luftspalts (10) gesteuert wird, wenn der Luftspalt (10) unterhalb eines Schwellenluftspaltwerts liegt,
wobei der Schwellenluftspaltwert durch die Steuerung (50) basierend auf Betriebsbedingungen bestimmt wird,
wobei der Schwellenluftspaltwert durch die Steuerung (50) mittels eines Schätzungsverfahrens berechnet wird, das Fluss- oder Spannungsschätzungen einbezieht.

2. Elektrischer Generator (11) nach Anspruch 1, wobei eine Vielzahl von Sensoren (60) in einer Vielzahl von jeweiligen Positionen, die um die Drehachse (Y) verteilt sind, zum Bereitstellen einer Vielzahl von jeweiligen Dickenmessungen des Luftspalts (10) zwischen dem Stator (20) und dem Rotor (30) positioniert ist, wobei die Steuerung (50) zum Empfangen der Vielzahl von Messungen des Luftspalts (10) mit der Vielzahl von Sensoren (60) verbunden ist.

3. Elektrischer Generator (11) nach Anspruch 1, wobei die Steuerung (50) zum Bestimmen der Dicke des Luftspalts (10) durch einen Schätzungsvorgang konfiguriert ist.

4. Elektrischer Generator (11) nach einem der vorhergehenden Ansprüche, wobei die Steuerung (50) zum Steuern des Stroms, der in jedem der Wicklungssysteme (41, 42, 43, 44) fließt, konfiguriert ist, sodass eine Vielzahl von magnetischen Radialkräften, die jeweils auf die Wicklungssysteme (41, 42, 43, 44) einwirken, erzeugt wird, wobei jede magnetische Radialkraft zum Reduzieren des Luftspalts (10), wenn der Luftspalt (10) oberhalb des Schwellenluftspaltwerts liegt, und Vergrößern des Luftspalts, wenn der Luftspalt unterhalb des Schwellenluftspaltwerts liegt, auf den Stator (20) und/oder den Rotor (30) einwirkt.

5. Elektrischer Generator (11) nach einem der vorhergehenden Ansprüche 1 bis 3, wobei die Vielzahl von Wicklungssystemen (41, 42, 43, 44) in dem Stator (20) bereitgestellt ist, der Rotor (30) eine Vielzahl von Permanentmagneten (70) umfasst, eine Magnetanziehung zwischen dem Stator (20) und dem Rotor (30) infolge der magnetischen Wechselwirkung zwischen den Wicklungssystemen (41, 42, 43, 44) und den Permanentmagneten (70) aktiv ist, und die Steuerung (50) zum Steuern des Stroms, der in mindestens einem der Wicklungssysteme (41, 42, 43, 44) fließt, konfiguriert ist, sodass die magnetische Radialkraft die Magnetanziehung verringert, wenn der Luftspalt (10) unterhalb des Schwellenluftspaltwerts liegt.

6. Elektrischer Generator (11) nach Anspruch 5, wobei die Steuerung (50) zum Steuern des Stroms, der in den Wicklungssystemen (41, 42, 43, 44) fließt, konfiguriert ist, sodass eine Vielzahl von magnetischen Radialkräften, die jeweils auf die Wicklungssysteme (41, 42, 43, 44) einwirken, erzeugt wird, wobei jede magnetische Radialkraft, die auf den Stator (20) und/oder den Rotor (30) einwirkt, die Magnetanziehung verringert, wenn der Luftspalt (10) unterhalb des Schwellenluftspaltwerts liegt, und die Magnetanziehung vergrößert, wenn der Luftspalt (10) oberhalb des Schwellenluftspaltwerts liegt.

7. Elektrischer Generator (11) nach einem der vorhergehenden Ansprüche, wobei der elektrische Generator (11) n Wicklungssysteme (41, 42, 43, 44) umfasst, wobei n eine ganze Zahl größer als eins ist und wobei jedes einen Winkel von 360°/n Grad um eine Drehachse des elektrischen Generators (11) abdeckt.

8. Elektrischer Generator (11) nach einem der vorhergehenden Ansprüche, wobei die Steuerung (50) zum Steuern des Stroms, der in mindestens einem der Wicklungssysteme (41, 42, 43, 44) fließt, durch Steuern der Amplitude und/oder des Phasenwinkels des Stroms konfiguriert ist.

9. Windturbine (1), beinhaltend einen elektrischen Generator (11) nach einem der vorhergehenden Ansprüche.

10. Verfahren zum Betreiben eines elektrischen Generators (11) für eine Windturbine (1), umfassend einen Stator (20) oder einen Rotor (30), der eine Vielzahl von Wicklungssystemen (41, 42, 43, 44) aufweist, wobei jedes Wicklungssystem (41, 42, 43, 44) einen jeweiligen Winkelabschnitt des Stators oder des Rotors um eine Drehachse (Y) des elektrischen Generators (11) abdeckt, wobei das Verfahren die folgenden Schritte beinhaltet:
Messen oder Schätzen einer Dicke eines Luftspalts (10) zwischen dem Stator (20) und dem Rotor (30), Steuern des Stroms, der in den Wicklungssystemen (41, 42, 43, 44) fließt,
Steuern, durch eine Steuerung, des Stroms, der in mindestens einem der Wicklungssysteme (41, 42, 43, 44) fließt, sodass eine jeweilige magnetische Radialkraft erzeugt wird, wobei die magnetische Radialkraft zum Vergrößern des Luftspalts (10) auf den Stator (20) und/oder den Rotor (30) einwirkt,
**dadurch gekennzeichnet, dass**
der Strom zum Vergrößern des Luftspalts (10) gesteuert wird, wenn der Luftspalt unterhalb eines Schwellenluftspaltwerts liegt,
wobei der Schwellenluftspaltwert durch die Steuerung (50) basierend auf Betriebsbedingungen bestimmt wird,
wobei der Schwellenluftspaltwert durch die Steuerung (50) mittels eines Schätzungsverfahrens berechnet wird, das Fluss- oder Spannungsschätzungen einbezieht.

11. Verfahren nach Anspruch 10,
wobei der Schritt des Steuerns Steuern des Stroms, der in jedem der Wicklungssysteme (41, 42, 43, 44) fließt, sodass eine Vielzahl von magnetischen Radialkräften, die jeweils auf die Wicklungssysteme (41, 42, 43, 44) einwirken, erzeugt wird, beinhaltet, wobei jede magnetische Radialkraft zum Reduzieren des Luftspalts (10), wenn der Luftspalt (10) oberhalb des Schwellenluftspaltwerts liegt, und Vergrößern des Luftspalts, wenn der Luftspalt unterhalb des Schwellenluftspaltwerts liegt, auf den Stator (20) und/oder den Rotor (30) einwirkt.

## Revendications

1. Générateur électrique (11) pour une éolienne (1) comprenant un stator (20) ou un rotor (30), le stator (20) ou le rotor (30) présentant une pluralité de systèmes d'enroulement (41, 42, 43, 44), chaque système d'enroulement (41, 42, 43, 44) couvrant une portion angulaire respective du stator (20) ou du rotor (30) autour d'un axe de rotation (Y) du générateur électrique (11), et un dispositif de commande (50) pour commander le courant circulant dans les systèmes d'enroulement (41, 42, 43, 44), dans lequel le dispositif de commande (50) est configuré pour recevoir ou déterminer une épaisseur d'un entrefer (10) entre le stator (20) et le rotor (30) et commander le courant circulant dans au moins un des systèmes d'enroulement (41, 42, 43, 44) de manière à générer une force radiale magnétique respective, la force radiale magnétique agissant sur le stator (20) et/ou le rotor (30) afin d'augmenter l'entrefer,
**caractérisé en ce que**
le courant est commandé pour augmenter l'entrefer (10) lorsque l'entrefer (10) est inférieur à une valeur d'entrefer seuil,
dans lequel la valeur d'entrefer seuil est déterminée par le dispositif de commande (50) sur la base de conditions de fonctionnement,
dans lequel la valeur d'entrefer seuil est calculée par le dispositif de commande (50) au moyen d'un procédé d'estimation impliquant des estimations de flux ou de tension.

2. Générateur électrique (11) selon la revendication 1, dans lequel une pluralité de capteurs (60) est positionnée dans une pluralité de positions respectives réparties autour de l'axe de rotation (Y) pour fournir une pluralité de mesures d'épaisseur respectives de l'entrefer (10) entre le stator (20) et le rotor (30), le dispositif de commande (50) étant relié à la pluralité de capteurs (60) pour recevoir la pluralité de mesures de l'entrefer (10).

3. Générateur électrique (11) selon la revendication 1, dans lequel le dispositif de commande (50) est configuré pour déterminer l'épaisseur de l'entrefer (10) au moyen d'une procédure d'estimation.

4. Générateur électrique (11) selon l'une quelconque des revendications précédentes, dans lequel le dispositif de commande (50) est configuré pour commander le courant circulant dans chacun des systèmes d'enroulement (41, 42, 43, 44) de manière à générer une pluralité de forces radiales magnétiques agissant respectivement sur les systèmes d'enroulement (41, 42, 43, 44), chaque force radiale magnétique agissant sur le stator (20) et/ou le rotor (30) pour réduire l'entrefer (10) lorsque l'entrefer (10) est supérieur à la valeur d'entrefer seuil et augmenter l'entrefer lorsque l'entrefer est inférieur à la valeur d'entrefer seuil.

5. Générateur électrique (11) selon l'une quelconque des revendications 1 à 3, dans lequel la pluralité de systèmes d'enroulement (41, 42, 43, 44) est prévue dans le stator (20), le rotor (30) comprenant une pluralité d'aimants permanents (70), une force d'attraction magnétique s'exerçant entre le stator (20) et le rotor (30) en raison de l'interaction magnétique entre les systèmes d'enroulement (41, 42, 43, 44) et les aimants permanents (70), le dispositif de commande (50) étant configuré pour commander le courant circulant dans au moins l'un des systèmes d'enroulement (41, 42, 43, 44) de sorte que la force radiale magnétique diminue la force d'attraction magnétique lorsque l'entrefer (10) est inférieur à la valeur d'entrefer seuil.

6. Générateur électrique (11) selon la revendication 5, dans lequel le dispositif de commande (50) est configuré pour commander le courant circulant dans les systèmes d'enroulement (41, 42, 43, 44) de manière à générer une pluralité de forces radiales magnétiques agissant respectivement sur les systèmes d'enroulement (41, 42, 43, 44), chaque force radiale magnétique agissant sur le stator (20) et/ou le rotor (30) diminuant la force d'attraction magnétique lorsque l'entrefer (10) est inférieur à la valeur d'entrefer seuil et augmentant la force d'attraction magnétique lorsque l'entrefer (10) est supérieur à la valeur d'entrefer seuil.

7. Générateur électrique (11) selon l'une quelconque des revendications précédentes, dans lequel le générateur électrique (11) comprend n systèmes d'enroulement (41, 42, 43, 44), n étant un nombre entier supérieur à un, couvrant chacun un angle de 360°/n degrés autour d'un axe de rotation du générateur électrique (11).

8. Générateur électrique (11) selon l'une quelconque des revendications précédentes, dans lequel le dispositif de commande (50) est configuré pour commander le courant circulant dans au moins l'un des systèmes d'enroulement (41, 42, 43, 44) en commandant l'amplitude et/ou l'angle de phase du courant.

9. Éolienne (1) incluant un générateur électrique (11) selon l'une quelconque des revendications précédentes.

10. Procédé de fonctionnement d'un générateur électrique (11) pour une éolienne (1) comprenant un stator (20) ou un rotor (30) présentant une pluralité de systèmes d'enroulement (41, 42, 43, 44), chaque système d'enroulement (41, 42, 43, 44) couvrant une portion angulaire respective du stator ou du rotor autour d'un axe de rotation (Y) du générateur électrique (11), le procédé comprenant les étapes consistant à : mesurer ou estimer une épaisseur d'un entrefer (10) entre le stator (20) et le rotor (30) ; commander le courant circulant dans les systèmes d'enroulement (41, 42, 43, 44) ; commander, par un dispositif de commande, le courant circulant dans au moins l'un des systèmes d'enroulement (41, 42, 43, 44) de manière à générer une force radiale magnétique respective, la force radiale magnétique agissant sur le stator (20) et/ou le rotor (30) afin d'augmenter l'entrefer (10), **caractérisé en ce que**
le courant est commandé pour augmenter l'entrefer (10) lorsque l'entrefer est inférieur à une valeur d'entrefer seuil,
dans lequel la valeur d'entrefer seuil est déterminée par le dispositif de commande (50) sur la base de conditions de fonctionnement,
dans lequel la valeur d'entrefer seuil est calculée par le dispositif de commande (50) au moyen d'un procédé d'estimation impliquant des estimations de flux ou de tension.

11. Procédé selon la revendication 10,
dans lequel l'étape de commande comprend la commande du courant circulant dans chacun des systèmes d'enroulement (41, 42, 43, 44) de manière à générer une pluralité de forces radiales magnétiques agissant respectivement sur les systèmes d'enroulement (41, 42, 43, 44), chaque force radiale magnétique agissant sur le stator (20) et/ou le rotor (30) pour réduire l'entrefer (10) lorsque l'entrefer (10) est supérieur à la valeur d'entrefer seuil et augmenter l'entrefer lorsque l'entrefer est inférieur à la valeur d'entrefer seuil.
